# EUROPEAN PATENT APPLICATION

(11) **EP 1 845 393 A2**
(43) Date of publication of application: **17.10.2007**
(21) Application number: 07106072.7
(22) Date of filing: 12.04.2007
(51) Int. Cl.: G02B 3/08, G02B 5/04

(54) **Fresnel lens, prism array, rear projection display apparatus, and illuminating apparatus**

(30) Priority: 13.04.2006 JP 2006111051
(71) Applicant: Sony Corporation, Minato-ku Tokyo 108-0075 (JP)
(72) Inventor: Ogawa, Yasufumi, Japan 108-0075 (JP)
(74) Representative: Körber, Martin Hans

(57) **Abstract**

A Fresnel lens (5) is provided. The Fresnel lens (5) includes a plurality of prisms (7) arrayed on an incident surface side thereof, the prisms refracting light incident on a refractive surface (7a), and reflecting the light refracted thereon on the reflective surface (7b) to be directed to an exit surface side (7c), in which at least a part of the Fresnel lens (5) includes a space-adjusting surface (7d) provided to separate base portions of the refractive surface (7a) and the reflective surface (7b) between adjacent prisms.

## Description

### CROSS REFERENCES TO RELATED APPLICATIONS

The present invention contains subject manner related to Japanese Patent Application JP 2006-111051 filed in the Japanese Patent Office on April 13, 2006, the entire contents of which being incorporated herein by reference.

### BACKGROUND OF THE INVENTION

### Field of the Invention:

The present invention relates to a Fresnel lens and a prism array which deflect light beams emitted from a light source, and relates to a rear projection display apparatus and an illuminating apparatus which use the Fresnel lens or the prism array.

### Description of the Related Art:

A Fresnel lens and a prism array have been known as optical elements having a function of deflecting light beams emitted from a light source.

For example, a rear projection display apparatus uses the Fresnel lens and prism array as components for a transmissive screen. As is known, the rear projection display apparatus is a kind of image display apparatus magnifying and projecting image light emitted from an image light source such as a CRT, LCD device, DLP (Digital Light Processing) device, laser light source, or the like onto a transmissive screen from the rear side, and an image is viewed from the front side thereof.

Further, an illuminating apparatus that illuminates a target with light and projects light onto a screen and a wall also uses the Fresnel lens and prism array to deflect light beams emitted from a light source.

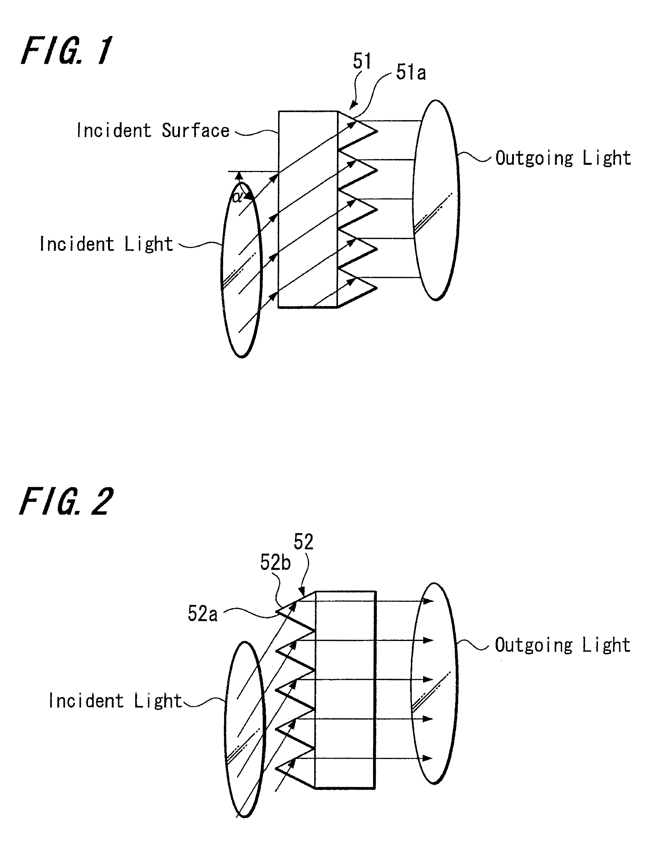

There are two kinds of Fresnel lens and prism array, one of which is a refractive type and the other of which is a reflective type. As shown in FIG. 1, a refractive Fresnel lens and prism array include a plurality of minute triangular prisms 51 arrayed (concentrically in the case of the Fresnel lens, and in the form of matrix in the case of the prism array) on the light exit side (opposite to the side where a light source is provided), using refraction on an exit surface 51a of the prism 51 to adjust an angle of light beams. On the other hand, as shown in FIG. 2, a reflective Fresnel lens and prism array include a plurality of minute triangular prisms 52 arrayed on the incident side (light source side), and reflect incident light, which has been refracted on a refractive surface 52a, on a reflective surface 52b to be directed to the exit side, thereby adjusting an angle of light beams.

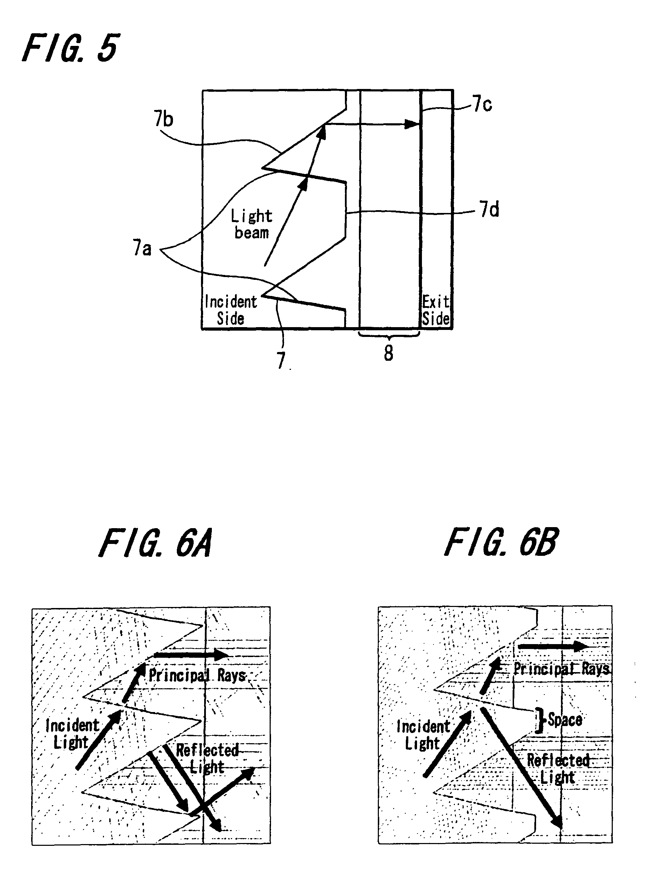

The refractive Fresnel lens and prism array have such a characteristic that a large incident angle (α shown in FIG. 1) of light beams may increase loss due to reflection on the incident surface, thereby decreasing transmittance. Accordingly, in the case of light beams having a large incident angle, the reflective Fresnel lens or prism array is used in general. However, as shown in FIG. 3, part of light beams reflected on the refractive surface and reflective surface are repeatedly reflected and refracted in the reflective Fresnel lens and prism array, and cause stray light unless a minimum incident angle is large to some extent. Particularly, it is difficult to separate principal rays and stray light outgoing from the Fresnel lens and prism array at an angle in proximity to the principal rays, which causes a problem.

As described above, the refractive Fresnel lens and prism array may not be used in a system including a range where an incident angle of light beams is large, and the reflective Fresnel lens and prism array may not be used in a system including a range where an incident angle of light beams is small. Accordingly, there may be a range between both the cases,
where both the refractive and reflective Fresnel lenses and prism arrays may not be used, though the Fresnel lens and prism array may be required to be used.

WO/2002/027399 discloses a hybrid type Fresnel lens having a refractive surface and a reflective surface on the incident side and capable of being used for a range of incident angles between refractive type and total-reflection type Fresnel lenses.

### SUMMARY OF THE INVENTION

However, the Fresnel lens of the hybrid type described in the above patent reference has such problems that:
(1) the shape of a prism is complicated and a mold for the prism may be difficult to be processed; and
(2) chipping and other problems may occur when processing the prism, because an angle of the pointed tip of a cutting tool for the mold processing is small, and as a result, a success rate for the processing is low.

Further, since a direction of light reflected on respective surfaces such as an incident surface is not adjusted intentionally, such reflected light may further be reflected and refracted inside the Fresnel lens, and outgo as stray light, which may cause ghost images and result in degradation of the quality of images in the case of a rear projection display apparatus.

It is desirable to provide a rear projection display apparatus and an illuminating apparatus that use a reflective Fresnel lens and reflective prism array, in which stray light is controlled in the case of using light beams having a minimum incident angle comparatively small and a mold can be processed comparatively readily in the case of manufacturing the Fresnel lens and prism array using the mold.

According to an embodiment of the present invention, there is provided a Fresnel lens including a plurality of prisms arrayed on an incident surface side thereof, the prisms refracting light incident on a refractive surface and reflecting the light refracted thereon on the reflective surface to be directed to an exit surface side, in which at least a part of the Fresnel lens includes a space-adjusting surface provided to separate base portions of the refractive surface and the reflective surface between adjacent prisms.

According to the reflective Fresnel lens, a space is provided to separate base portions of the refractive surface and the reflective surface between adjacent prisms, thereby controlling a direction of light beams reflected partly on the refractive surface, and preventing stray light from outgoing at an angle in proximity to principal rays. Accordingly, also in the case where incident light beams have a comparatively small minimum-incident angle, stray light outgoing in proximity to an angle of principal rays can be controlled.

The direction of light beams partly reflected on the refractive surface can be controlled arbitrarily to some extent by adjusting the width of the space-adjusting surface. Accordingly, such adjustment to the width of the space-adjusting surface enables a pitch and height of prisms to be modified without changing angles of the refractive surface and reflective surface.

Further, since the height of the prism in relation to the pitch thereof is lowered due to such adjustment to the width of the space-adjusting surface, the amount of processing can be reduced when processing a mold for prisms. Therefore, load to a processing apparatus and cutting tools can be reduced; processing time can be shortened; and a success rate for preparing a mold and finished quality thereof can be improved. Accordingly, the mold can be processed comparatively readily.

Furthermore, grooves of the mold can be made shallow by lowering the height of prisms, which enables silicon and resin to fill the mold readily and to be detached from the mold with less difficulty, in the case of preparing a duplicate mold and manufacturing a Fresnel lens as a commercial product.

According to an embodiment of the present invention, there is provided a reflective prism array including a plurality of prisms arrayed on an incident surface side thereof in the form of a matrix, the prisms refracting light incident on a refractive surface and reflecting the light refracted thereon on the reflective surface to be directed to an exit surface side, in which at least a part of the prism array includes a space-adjusting surface provided to separate base portions of the refractive surface and the reflective surface between adjacent prisms.

According to the reflective prism array, similar to the Fresnel lens according to an embodiment of the present invention as described above, also in the case where incident light beams have a comparatively small minimum-incident angle, stray light outgoing in proximity to an angle of principal rays can be controlled, and the mold can be processed comparatively readily.

According to an embodiment of the present invention, there is provided a rear projection display apparatus including: an image light source emitting image light, and a transmissive screen in which the image light is projected onto the back surface thereof. The transmissive screen uses a Fresnel lens including a plurality of prisms arrayed on an incident surface side thereof (or a prism array including a plurality of prisms arrayed on the incident side thereof in the form of a matrix). The prisms refract light incident on a refractive surface and reflect the light refracted thereon on the reflective surface to be directed to an exit surface side. At least a part of the Fresnel lens (or the prism array) includes a space provided to separate base portions of the refractive surface and the reflective surface between adjacent prisms.

The rear projection display apparatus uses the Fresnel lens or prism array according to an embodiment of the present invention for the transmissive screen. Therefore, also in the case where incident light beams have a comparatively small minimum-incident angle, stray light outgoing in proximity to an angle of principal rays can be controlled, thereby preventing ghost images from being generated. In addition, prisms for a Fresnel lens and prism array can be manufactured comparatively readily.

According to an embodiment of the present invention, there is provided an illuminating apparatus including: a light source, and a Fresnel lens (or a prism array) for illuminating a target with light emitted from the light source. The Fresnel lens includes a plurality of prisms arrayed on an incident surface side thereof, the prisms refracting light incident on a refractive surface and reflecting the light refracted thereon on the reflective surface to be directed to an exit surface side, in which at least a part of the Fresnel lens includes a space provided to separate base portions of the refractive surface and the reflective surface between adjacent prisms. (Alternatively, the prism array includes a plurality of prisms arrayed on an incident surface side thereof in the form of a matrix, the prisms refracting light incident on a refractive surface and reflecting the light refracted thereon on the reflective surface to be directed to an exit surface side, in which at least a part of the prism array includes a space provided to separate base portions of the refractive surface and the reflective surface between adjacent prisms.)

The illuminating apparatus uses the Fresnel lens or prism array according to an embodiment of the present invention as described above, and deflects light emitted from a light source to illuminate a target. Accordingly, also in the case where light beams having a comparatively small minimum-incident angle are incident on the Fresnel lens and prism array, stray light can be controlled. In addition, prisms for a Fresnel lens and prism array can be manufactured comparatively readily.

According to embodiments of the present invention, stray light outgoing in proximity to an angle of principal rays can be controlled in the rear projection display apparatus, illuminating apparatus, and the like that use a Fresnel lens and prism array, also in the case where incident light beams have a comparatively small minimum-incident angle. In addition, a mold for a Fresnel lens and prism array can be processed comparatively readily, and the Fresnel lens and prism array can be prepared comparatively readily.

### BRIEF DESCRIPTION OF THE DRAWINGS

FIG. 1 is a sectional view of a refractive Fresnel lens;
FIG. 2 is a sectional view of a reflective Fresnel lens;
FIG. 3 is a diagram showing stray light generated on the reflective Fresnel lens;
FIG. 4 is a diagram showing an optical system of a rear projection display apparatus to which an embodiment of the present invention is applied;
FIG. 5 is a sectional view of a Fresnel lens shown in FIG. 4;
FIG. 6A is a diagram showing a direction of light reflected on a typical triangular prism, and FIG. 6B is a diagram showing a direction of light reflected on a prism having a space-adjusting surface;
FIGS. 7A and 7B are diagrams showing examples in which a pitch and height of a prism are modified respectively by adjusting the space-adjusting surface;
FIG. 8A is a diagram showing an example of the space-adjusting surface with antiglare processing, and FIG. 8B is a diagram showing an example of the space-adjusting surface with a curvature;
FIG. 9A is a diagram showing an example in which a diffusing layer is provided, and FIG. 9B is a diagram showing an example in which a tinted substrate is used;
FIG. 10A is a diagram showing light deficiency, and FIG. 10B is a polygonal prism preventing the light deficiency; and
FIG. 11 is a diagram showing an optical system of an illuminating apparatus according an embodiment of the present invention.

### DESCRIPTION OF THE PREFERRED EMBODIMENTS

### [Example of Application to Rear Projection Display Apparatus]

Hereinafter, embodiments of the present invention will be described specifically with reference to the drawings. First, a rear projection display apparatus to which an embodiment of the present invention is applied will be described. FIG. 4 is a schematic view showing an optical system of the rear projection display apparatus to which an embodiment of the present invention is applied. An image light source 1 is formed of a CRT, LCD device, DLP (Digital Light Processing) device, laser light source, or the like, is driven in accordance with video data supplied from a video signal processing system not shown, and emits image light.

Image light emitted from the image light source 1 is incident on a projection mirror 3 after being magnified by a projection lens 2 including a plurality of lenses combined. Then, the light is reflected and magnified by the projection mirror 3, being projected onto a transmissive screen 4 from the rear surface thereof to be emitted to a viewer side.

The transmissive screen 4 includes a Fresnel lens 5 on the light source side (on the side of the projection mirror 3), and a lenticular lens 6 on the viewer side. The Fresnel lens 5 has a function of parallelizing radial light beams emitted from the light source. The lenticular lens 6 has a function of expanding a viewing angle by deflecting incident light.

The transmissive screen 4 is characterized by a structure of the Fresnel lens 5. FIG. 5 is a sectional view showing the structure of the Fresnel lens 5. The Fresnel lens 5 is a reflective Fresnel lens including a plurality of minute prisms 7 concentrically arrayed on the light incident side (light source side). On the whole surface of the Fresnel lens 5, each of the prisms 7 includes: a refractive surface (first plane) 7a refracting incident light; a reflective surface (second plane) 7b reflecting the light refracted on the refractive surface 7a to be directed to the exit side; an exit surface (third plane) 7c from which the light reflected on the reflective surface 7b outgoes; and a space-adjusting surface (fourth plane) 7d provided to form a space between adjacent prisms 7 by separating base portions of the refractive surface 7a and the reflective surface 7b.

FIG. 6B shows a direction of light reflected on a prism having such space-adjusting surface, as compared to FIG. 6A showing a direction of light reflected on a typical triangular prism.

An angle of image light incident on the Fresnel lens varies depending on the position in the vertical direction (up and down direction in FIG. 4) on the screen. Depending on the angle of incident light, light beams reflected on the incident surface of the typical triangular prism may repeat reflection and refraction inside the Fresnel lens. FIG. 6A shows that light beams partly reflected on the refractive surface of the prism are reflected between the prisms to be directed in upward and downward directions. The light reflected upward repeats reflection and refraction inside the Fresnel lens, and as a result, becomes stray light outgoing from the Fresnel lens at an angle in proximity to principal rays, as shown in FIG. 3. It is difficult to separate principal rays and such stray light having an angle in proximity to the principal rays, and further, such stray light can be recognized easily by viewers, causing ghost images to be generated and deteriorating image quality.

On the contrary, the prism provided with the space-adjusting surface includes a space between base portions of the refractive surface and reflective surface of adjacent prisms, thereby controlling the direction of part of traveling light beams reflected on the refractive surface and exit surface, and preventing stray light from outgoing at an angle in proximity to principal rays. FIG. 6B shows that light beams reflected on the refractive surface similar to FIG. 6A go downward at an angle greatly different from the principal rays, without being reflected again on the prism.

As described above, stray light can be controlled using the Fresnel lens 5, also in the case where light beams from an optical system having a comparatively small minimum-incident angle are incident thereon. Accordingly, ghost images can be prevented from being generated in the rear projection display apparatus shown in FIG. 4.

A direction of traveling light beams partly reflected on the refractive surface can arbitrarily be controlled to some extent by adjusting the width of the space-adjusting surface. Further, the pitch and height of the prisms can be modified without changing angles of the refractive surface and reflective surface.

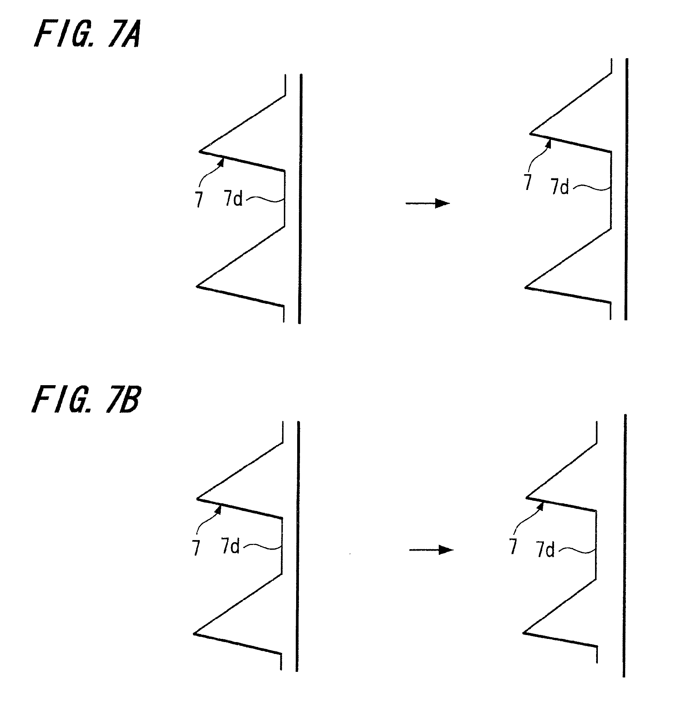

FIGS. 7A and 7B are diagrams showing examples in which the pitch and height of the prisms are modified by adjusting the width of the space-adjusting surface. FIG. 7A shows an example of increasing the width of the space-adjusting surface 7d (see the left view and right view) without changing the thickness thereof, thereby increasing the pitch of the prism 7. FIG. 7B shows an example of increasing the thickness of the space-adjusting surface 7d (see the left view and right view), thereby reducing the height (from the space-adjusting surface 7d to the top of the prism) of the prism 7.

An amount of processing for preparing a mold can be reduced by lowering the height of the prism as shown in FIG. 7B, thereby reducing the load to processing apparatuses and cutting tools, shortening processing time, and improving a success rate for preparing the mold and a finished quality. Accordingly, the mold can be processed comparatively readily.

Furthermore, grooves of the mold can be made shallow because of the height of the prism being low. Accordingly, silicon and resin can fill the mold readily and can be detached from the mold with less difficulty, in the case of preparing a duplicate mold and manufacturing a Fresnel lens as a commercial product.

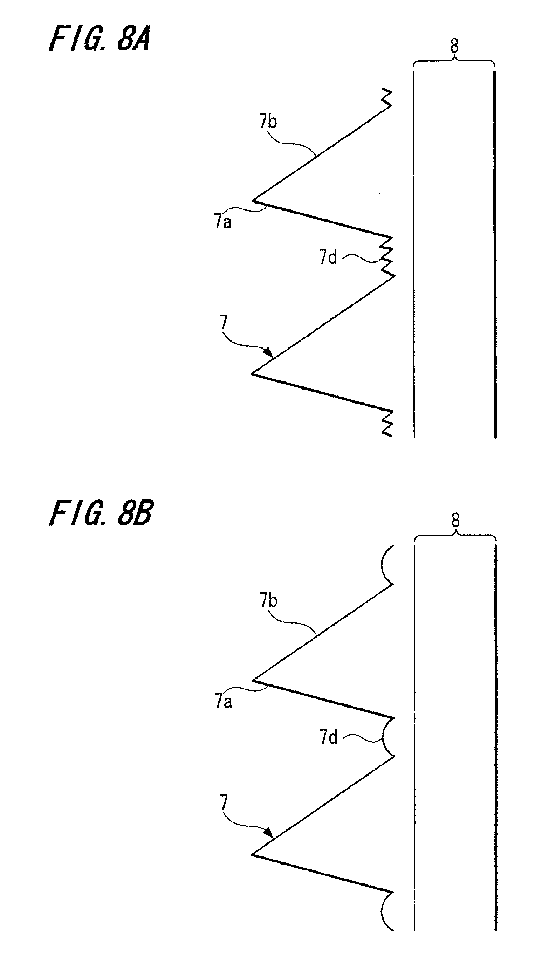

Preferred examples of a modified structure of the above-described Fresnel lens 5 are described in the followings. FIG. 8A shows an example in which antiglare (AG) processing is performed on the space-adjusting surface 7d to have plane roughness (minute concaves and convexes). With the antiglare processing, ghost images can further be controlled, because in the case where light beams partly reflected on the refractive surface are incident on the space-adjusting surface 7d, such light beams are diffused and prevented from outgoing in a specific direction.

FIG. 8A shows an example in which antiglare processing is directly performed on the space-adjusting surface 7d. However, an AG layer (including particles on the surface of a binder to have an appropriate plane roughness) may be formed on the space-adjusting surface 7d.

Further, an antireflective (AR) layer may be formed on the space-adjusting surface 7d. With the antireflective layer, stray light can further be prevented from being generated, because in the case where light beams partly reflected on the refractive surface and exit surface are incident on the space-adjusting surface 7d, only a small amount of light is reflected on the space-adjusting surface 7d. Furthermore, a layer having functions of both the AG layer and AR layer may be formed on the space-adjusting surface 7d.

FIG. 8B shows an example in which the space-adjusting surface 7d is not a flat surface, but a convex surface having a curvature. With such adjustable surface being used as the space-adjusting surface 7d, ghost images can further be controlled, because in the case where light beams partly reflected on the refractive surface and reflective surface are incident on the space-adjusting surface 7d, such light beams are diffused and can be prevented from outgoing in a specific direction.

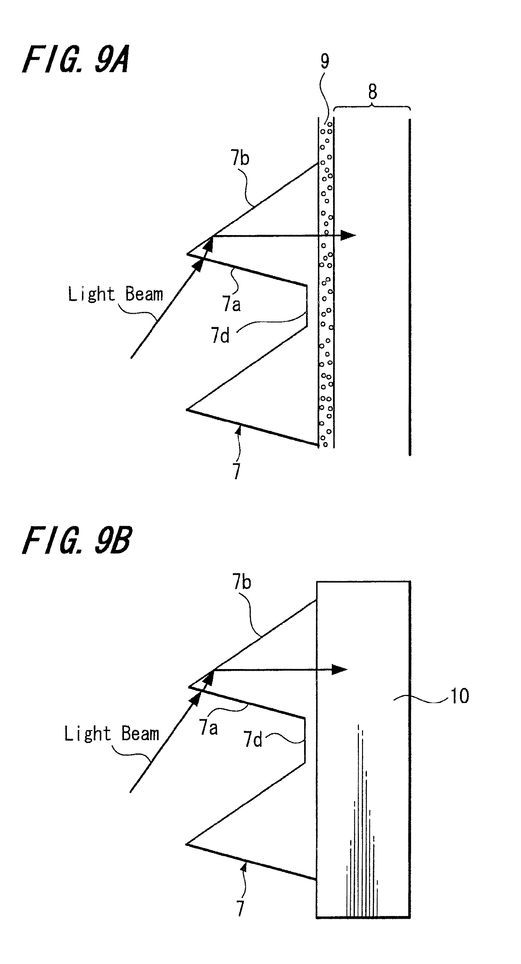

FIG. 9A shows an example in which a diffusing layer is provided between the prism 7 and a substrate 8. In general, stray light has a light path longer than that of principal rays, and therefore the stray light can be diffused more than the principal rays using such diffusing layer. Accordingly, the stray light can further be controlled.

FIG. 9B shows an example in which a tinted substrate (transparent black substrate) 10 is used. As described above, stray light has a light path longer than that of principal rays, and therefore, stray light can be attenuated more than principal rays using such tinted substrate. Accordingly, stray light can further be controlled.

FIG. 9B shows the example in which the substrate is tinted. However, tinted prisms or both the tinted substrate and prisms may be used.

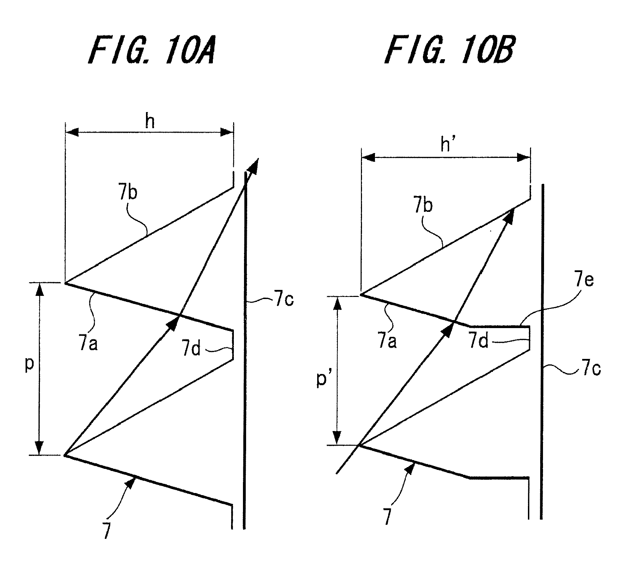

FIG. 10B shows an example in which the prism 7 has a polygonal shape including a shape-adjusting surface (fifth plane) 7e between the refractive surface 7a and exit surface 7c. The shape-adjusting surface can be used as described in the following (1) to (5).
(1) An angle of the refractive surface formed with the exit surface, and an angle of the reflective surface formed with the exit surface can arbitrarily be adjusted by modifying the length and angle of the shape-adjusting surface, regardless of a pitch and pointed angle of the prism. Specifically, design freedom can be enhanced, when the shape-adjusting surface is used to adjust the shape of the prism.
   Accordingly, in the case where light beams having a small incident angle are incident on the Fresnel lens, the angle of the refractive surface can be adjusted easily corresponding thereto (in other words, the angle of the refractive surface can be adjusted so that light beams partly reflected on the refractive surface are prevented from being stray light), thereby further controlling the stray light.
   Further, an angle of the reflective surface can arbitrarily be adjusted without difficulty, and therefore an angle of light beams outgoing from the Fresnel lens can arbitrarily be adjusted.
(2) A pitch and height of the prism can arbitrarily be set by modifying the length and angle of the shape-adjusting surface, without changing respective angles of the refractive surface and reflective surface.
(3) In general, if the incident angle of light beams is small, or the whole Fresnel lens and prisms are slanted, the incident light may go through the Fresnel lens without being incident on the reflective surface after being refracted on the refractive surface of the prism. FIG. 10A shows such deficiency of light.
   Adjusting a pitch and height of the prism, and using practically a narrow area of the reflective surface with a margin, light can be prevented from going through the Fresnel lens. However, in the case of triangular prisms, it is not easy due to less design freedom. The polygonal prism including the shape-adjusting surface, on the contrary, has more design freedom, and therefore the Fresnel lens with a preferable margin can be obtained, thereby preventing light deficiency without difficulty. FIG. 10B described above shows an example of the polygonal prism designed to prevent light from going through the prism without reflection.
(4) An angle of the shape-adjusting surface can be set so that the prism has an arbitrary draft angle, and therefore a mold for the prism can be made readily, and a molded product can be detached without difficulty.
(5) When processing a mold for a prism, the top portion of the mold (bottom portion of the molded product) often bends, which may cause problems. If such mold is used to prepare a prism, the Fresnel lens may have such problems that part of the reflective surface has an inaccurate angle, and light beams are trapped in the bent portions. As a result, incident light may become stray light, and light beams may be blocked to cause streaks in an image, which causes picture quality to be deteriorated. Adjusting a pitch and height of the prism, and using practically a narrow area of the reflective surface (not using an area where the angle is inaccurate) can prevent light from being stray light and from causing streaks, because somewhat bent tips of the mold may not affect reflected light. However, in the case of triangular prisms, it is not easy to prevent such stray light and streaks due to less design freedom. The polygonal prism including the shape-adjusting surface, on the contrary, has more design freedom, and therefore the Fresnel lens with a preferable margin can be obtained, with which stray light and streaks can be prevented and the picture quality can be prevented easily from being deteriorated, even if the finished quality of the mold is somewhat undesirable.

FIG. 10B shows the example in which the shape-adjusting surface is a flat plane. However, the AG processing shown in FIG. 8A regarding the space-adjusting surface can also be performed on the shape-adjusting surface. With such AG processing being performed, light incident on the shape-adjusting surface can be diffused so as not to outgo in a specific direction, thereby further controlling stray light.

In addition, the shape-adjusting surface may be an adjustable surface as shown in FIG. 8B regarding the space-adjusting surface. Accordingly, light incident on the shape-adjusting surface can be scattered so as not to outgo in a specific direction, thereby further controlling stray light.

### [Example of Application to Illuminating Apparatus]

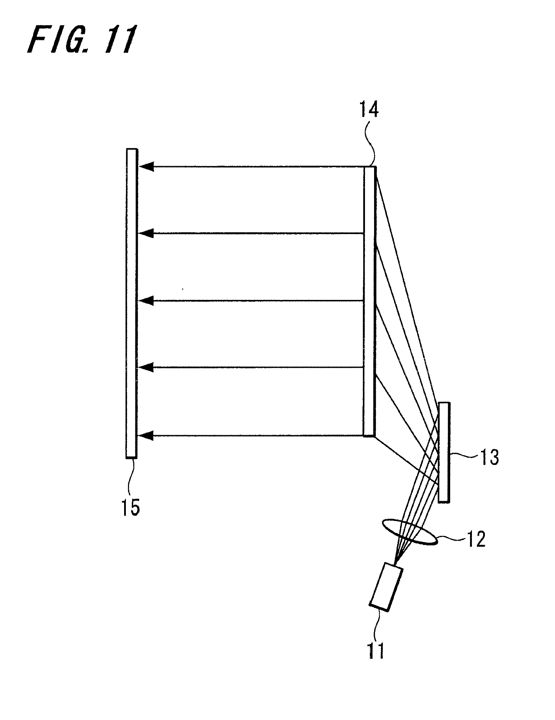

Next, an illuminating apparatus to which an embodiment of the present invention is applied to is described. FIG. 11 is a schematic diagram showing an optical system to which the embodiment is applied. A light source 11 emits image light generated by a DLP device, LCD, MEMS device, laser scanning, or the like (or emits light from a light source of a plurality of colors, light from a light source of a single color, ultraviolet rays, or infrared rays).

Light emitted from the light source 11 is incident on a back mirror 13 after being magnified by a projection lens 12 including a plurality of lenses combined (or formed of a single lens). The back mirror 13 is formed of a single or plurality of flat mirrors or aspheric mirrors, and has a function of directing incident light to specific directions, thereby gaining an optical path in a small space and deflecting incident light to an arbitrary direction.

The light reflected by the back mirror 13 is incident on a Fresnel lens 14 to be deflected, and then a target 15 is illuminated with the deflected light. It should be noted that there may be the case where the projection lens 12 and back mirror 13 are omitted.

The Fresnel lens 14 is a reflective Fresnel lens having a similar structure to that shown in FIG. 5 (further, it is preferable to have a structure of modified examples as shown in FIGS. 8 to 10). Accordingly, similar to the above-described embodiments, the Fresnel lens 14 can control stray light outgoing at an angle in proximity to principal rays, in the case
where light beams of an optical system having a comparatively small minimum-incident angle are incident on the Fresnel lens, thereby preventing the target 15 from being illuminated with the stray light. Further, with the same reasons as described above, a mold for the Fresnel lens 14 and the Fresnel lens itself can be formed comparatively readily. If the Fresnel lens 14 may need to be protected from damage, dust, or the like, a cover lens may be placed at the front of the Fresnel lens 14. Further, the cover lens may have optical characteristics of a fly's eye lens, lenticular lens, Fresnel lens, prism array, and the like.

It should be noted that each of the rear projection display apparatus and illuminating apparatus described above uses the reflective Fresnel lens to deflect light beams. However, the rear projection display apparatus and illuminating apparatus may use a reflective prism array (including a plurality of minute prisms arrayed on the light incident side in the form of a matrix) which is an optical component having a similar function as the reflective Fresnel lens that deflects light beams. The reflective prism array may include the prisms provided with the space-adjusting surface as shown in FIG. 5 (further, may have the structure shown in FIGS. 8 to 10 as modified examples).

Further, as shown in FIG. 5, the space-adjusting surface is provided to the prism itself in the above-described embodiments. However, as another example, prisms not having such space-adjusting surface may be arrayed on a substrate with a space separating the refractive surface and reflective surface between adjacent prisms (so that a surface of the substrate functions as the space-adjusting surface).

Furthermore, the shape-adjusting surface is provided to the prisms on the whole surface of the Fresnel lens in the above described embodiments. However, the space-adjusting surface may be provided to prisms at a portion of the Fresnel lens (for example, a portion where the incident angle is within a specific range).

The Fresnel lens and prism array according to embodiments of the present invention can be used not only in a rear projection display apparatus and an illuminating apparatus, but also in any occasion that may require light beams to be deflected.

It should be understood by those skilled in the art that various modifications, combinations, sub-combinations and alterations may occur depending on design requirements and other factors insofar as they are within the scope of the appended claims or the equivalents thereof.

## Claims

1. A Fresnel lens (5) comprising:
a plurality of prisms (7) arrayed on an incident surface side thereof,
the prisms (7) refracting light incident on a refractive surface (7a), and reflecting the light refracted thereon on the reflective surface (7b) to be directed to an exit surface side (7c),
wherein at least a part of the Fresnel lens includes a space-adjusting surface (7d) provided to separate base portions of the refractive surface (7a) and the reflective surface (7b) between adjacent prisms.

2. A Fresnel lens (5) according to claim 1, wherein:
the prisms (7) have a polygonal shape including
the refractive surface (7a) to refract incident light, the reflective surface (7b) to reflect the refracted light to be directed to the exit surface side (7c), the exit surface for the reflected light outgoing, and a shape-adjusting surface provided between the refractive surface (7a) and a base portion of the prism; and
the prisms (7) are arrayed with the space-adjusting surface (7d) provided to separate base portions of the shape-adjusting surface and the reflective surface (7b) between adjacent prisms.

3. A Fresnel lens (5) according to claim 2, wherein
the shape-adjusting surface has a curvature.

4. A Fresnel lens (5) according to claim 2, wherein antiglare processing is performed on the shape-adjusting surface.

5. A Fresnel lens (5) according to one of the claims 1 to 4, wherein
antiglare processing, antireflection processing, or processing having functions of both the processing steps is performed on the space-adjusting surface (7d).

6. A Fresnel lens (5) according to one of the claims 1 to 5, wherein
the space-adjusting surface has a curvature.

7. A Fresnel lens (5) according to one of the claims 1 to 6, wherein
the Fresnel lens includes a substrate having a diffusing layer.

8. A Fresnel lens (5) according to one of the claims 1 to 7, wherein
the prisms or the substrate, or both the prisms and the substrate are formed of a transparent black material.

9. A prism array comprising:
a plurality of prisms (7) arrayed on an incident surface side thereof in the form of a matrix,
the prisms (7) refracting incident light on a refractive surface (7a), and reflecting the light refracted thereon on the reflective surface (7b) to be directed to an exit surface side (7c),
wherein at least a part of the prism array includes a space-adjusting surface (7d) provided to separate base portions of the refractive surface (7a) and the reflective surface (7b) between adjacent prisms.

10. A rear projection display apparatus comprising:
an image light source emitting image light, and
a transmissive screen in which the image light is projected on the back surface thereof and which uses a Fresnel lens including a plurality of prisms arrayed on an incident surface side thereof,
the prisms refracting incident light on a refractive surface and reflecting the light refracted thereon on the reflective surface to be directed to an exit surface side,
wherein at least a part of the Fresnel lens includes a space provided to separate base portions of the refractive surface and the reflective surface between adjacent prisms.

11. A rear projection display apparatus comprising:
an image light source emitting image light, and
a transmissive screen in which the image light is projected on the back surface thereof and which uses a prism array including a plurality of prisms arrayed on an incident surface side thereof in the form of a matrix,
the prisms refracting incident light on a refractive surface and reflecting the light refracted thereon on the reflective surface to be directed to an exit surface side,
wherein at least a part of the prism array includes a space provided to separate base portions of the refractive surface and the reflective surface between adjacent prisms.

12. An illuminating apparatus comprising:
a light source, and
a Fresnel lens for illuminating a target with light emitted from the light source, the Fresnel lens including a plurality of prisms arrayed on an incident surface side thereof,
the prisms refracting incident light on a refractive surface and reflecting the light refracted thereon on the reflective surface to be directed to an exit surface side,
wherein at least a part of the Fresnel lens includes a space provided to separate base portions of the refractive surface and the reflective surface between adjacent prisms.

13. An illuminating apparatus comprising:
a light source, and
a prism array for illuminating a target with light emitted from the light source, the prism array including a plurality of prisms arrayed on an incident surface side thereof in the form of a matrix,
the prisms refracting incident light on a refractive surface and reflecting the light refracted thereon on the reflective surface to be directed to an exit surface side,
wherein at least a part of the prism array includes a space provided to separate base portions of the refractive surface and the reflective surface between adjacent prisms.
